# EUROPÄISCHE PATENTSCHRIFT

(11) **EP 0 458 775 B1**
(45) Veröffentlichungstag und Bekanntmachung des Hinweises auf die Patenterteilung: **23.03.1994**
(21) Anmeldenummer: 91890103.4
(22) Anmeldetag: 14.05.1991
(51) Int. Cl.: G01P 3/489, G01P 3/481

(54) **Vorrichtung zur elektronischen Messung der Drehzahl von Verbrennungskraftmaschinen und Verfahren zur Motorüberwachung mit dieser Vorrichtung**
Device for electronic measurement of the rotational speed of internal combustion engines and a method for motor surveillance using this device
Dispositif de mesure électronique de la vitesse de rotation d'un moteur à combustion interne et procédé de surveillance d'un moteur à l'aide de ce dispositif

(30) Priorität: 23.05.1990 AT 1139/90
(43) Veröffentlichungstag der Anmeldung: 27.11.1991
(73) Patentinhaber: Schoeggl, Peter, A-8020 Graz (AT)
(72) Erfinder: Schoeggl, Peter, A-8020 Graz (AT)
(74) Vertreter: Hübscher, Heiner, Dipl.-Ing.

(56) Entgegenhaltungen:
- DE-A- 3 421 640
- GB-A- 2 134 265
- GB-A- 2 198 241
- US-A- 4 016 753

## Beschreibung

Die Erfindung betrifft eine Vorrichtung zur elektronischen Messung der Drehzahl von Verbrennungskraftmaschinen mit dem Merkmalen des ersten Teiles von Anspruch 1.

Vorrichtungen dieser Art werden vor allen Dingen im Zusammenhang mit elektronischen Steuerungen für die Zumessung des Kraftstoffes, die Bestimmung des Zündzeitpunktes und für die Durchführung anderer Steuerungsmaßnahmen für den Motor verwendet. Dabei ist die wichtigste Information für diese Steuerungen die Information über momentane Drehzahl des Motors, wobei unter "Drehzahl" auch die sich ergebende Winkel- bzw. Umfangsgeschwindigkeit während der einzelnen Umdrehungen des Motors zu verstehen ist. Diese Umfangsgeschwindigkeit ändert sich insbesondere bei Verbrennungskraftmaschinen mit kleinen Schwungmassen, insbesondere kleinvolumigen Motoren mit geringer Zylinderzahl infolge der Expansion der Verbrennungsgase nach der Zündung und der Verdichtung der Verbrennungsgase vor der Zündung relativ stark, wobei die Schwankungen bei niedrigen Drehzahlen und hoher Motorbelastung am größten sind. Ferner treten Drehzahlschwankungen über mehrere Umdrehungen bei unregelmäßiger Verbrennung oder bewußter Unterlassung von Zündung und Kraftstoffeinspritzung während einzelner Umdrehungen auf. Diese Schwankungen lassen sich mit den bekannten Vorrichtungen der eingangs genannten Art nicht hinreichend genau bestimmen, so daß die gewünschte Echtzeitsteuerung beeinträchtigt wird.

Bei bekannten Vorrichtungen wird entweder die Umlaufzeit oder die Umlaufgeschwindigkeit der Kurbelwelle für die Drehzahlmessung erfaßt. Bei der ersten Variante ist dem Prinzip nach ein Zähler mit konstanter Zählfrequenz vorgesehen, der über die Bezugsmarken an einem drehenden Teil gesteuert oder abgefragt wird und damit die Wiederholzeit der Bezugsmarken erfaßt. Für die Bestimmung der Umlaufgeschwindigkeit sind eine Meßteilung bildende Umfangsmarken an einem mit der Kurbelwelle drehenden Teil, z. B. einer Drehgeberscheibe einfachster Bauart vorgesehen und es wird über eine Zeitgebereinrichtung eine Torzeit vorgegeben, während der die Anzahl der am Empfänger vorbeibewegten Meßteilungsmarken gezählt wird, wobei diese Zahl der durchschnittlichen Umlaufgeschwindigkeit bzw. Winkelgeschwindigkeit der Kurbelwelle proportional ist, aber die schon erwähnten Schwankungen der Umlaufgeschwindigkeit nicht erfaßt und daher auch nicht ausgewertet werden können. Es ist zwar aus der DE-A-34 21 640 bekannt, die Meßwerte für jeden Umlauf zu speichern und mit den Meßwerten für die nachfolgenden Umläufe zu vergleichen, um so Drehzahländerungen zu erfassen, doch wird hier zwar die Drehzahländerung festgestellt, doch erfolgt diese Feststellung erst im Nachhinein, so daß in die Steuerung nicht rechtzeitig eingegriffen werden kann.

Aus der GB-B-2 198 241 ist es bekannt, Teilungsungenauigkeiten einer Steuerscheibe oder eines Steuerzahnrades dadurch auszugleichen, daß für die einzelnen Steuermarken bzw. Zähne Korrekturtabellen in einem Rechner gespeichert werden, der beim Durchgang der einzelnen Marken die Meßwerte mit entsprechenden Korrektursignalen beaufschlagt, so daß die Messung nach den über den Rechner korrigierten Signalen und damit so erfolgt als ob die Steuerscheibe bzw. das Steuerzahnrad eine tatsächlich exakte Teilung hätten. Bei der Serienherstellung der Scheiben bzw. Zahnräder nimmt man an, daß auch übereinstimmende Korrekturwerte gegeben sind, so daß der Rechner mit fest programmierten Korrekturtabellen ausgestattet werden kann.

Ein Drehzahlsensor mit den Merkmalen des ersten Teiles von Anspruch 1 ist aus der US-A-4 016 753 bekannt. Der bekannte Sensor ermöglicht die Messung der momentanen Drehgeschwindigkeit an mehreren Stellen des Umlaufes.

Aufgabe der Erfindung ist die Schaffung einer Vorrichtung der eingangs genannten Art und eines Verfahrens zur Motorüberwachung mit Hilfe dieser Vorrichtung, die es ermöglichen sollen, Änderungen der Drehzahl auch innerhalb einer Umdrehung und vor allem an den für die Steuerung kritischen Stellen des Umlaufes zu erfassen und so eine genauere Steuerung der Verbrennungskraftmaschine auch betriebszustandsabhängig über elektronische Steuerungen zu ermöglichen.

Die gestellte Aufgabe wird durch die Vorrichtungsmerkmale des Patentanspruches 1 und die Verfahrensmerkmale des Patentanspruches 2 gelöst.

Es werden der Momentangeschwindigkeit proportionale Messungen durchgeführt. Durch zusätzliche Steuerung über den Bezugsmarkenempfänger kann festgelegt werden, in welchem Bereich z. B. welchem Winkelabstand vom Zündzeitpunkt die Geschwindigkeitsmessungen erfolgen, wobei nur eine einfache Rechenlogik erforderlich ist, die sogar in einem nur rechnerartigen Baustein realisiert werden kann, weil im wesentlichen nur Differenzbildungen stattfinden. Durch die Entscheidungslogik wird bewirkt, daß im Bereich stärkerer Drehzahlschwankungen, z. B. bei Betrieb des Motors mit Voll-last und bei starken Laständerungen des Motors eine Drehzahlbestimmung aus nur einer oder wenigen Einzelmessungen während einer Umdrehung stattfindet, da unter diesen Betriebsbedingungen die durch die Last bedingten Änderungen der Umfangsgeschwindigkeit größer sind als die Änderungen durch Ungleichförmigkeiten infolge von Zündung und Verdichtung, wogegen beim Dauerbetrieb mit etwa gleichbleibender mittlerer Belastung die letztgenannten Drehzahlschwankungen über mehrere Umdrehungen hinweg erfaßt und berücksichtigt werden können. Durch die erfindungsgemäße Maßnahme mit der Entscheidungslogik werden überdies Übersteuerungen des Motors, die zu einem "Schwingen" der Steuerung führen könnten, ausgeschaltet. Zusätzlich kann man die Entscheidungslogik auch über aus den Drehzahlmeßwerten direkt abgeleitete Signale steuern, wenn man vorgibt, daß ab einer bestimmten Differenz der beiden letzten Meßwerte auf die Kurzzeiterfassung zu schalten ist.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: ein Blockschema einer erfindungsgemäßen Vorrichtung und
- Fig. 2: ein Kreisschema, in dem die Abfragezeitpunkte und die anderen Charakteristika bei einer Motorumdrehung eingetragen sind.

Auf der Kurbelwelle einer Verbrennungskraftmaschine, einer mit der Kurbelwelle umlaufenden Welle oder auf einer eigenen von der Kurbelwelle angetriebenen Antriebswelle 1 sitzen beim Ausführungsbeispiel zwei Meßscheiben 2, 3 von denen die eine wenigstens eine Bezugsmarke 4 und die zweite (3) eine Meßteilung 5 bildende Marken trägt. Die Bezugsmarken 4 und die Meßteilung 5 sind vorzugsweise berührungslos von wenigstens je einem Aufnehmer 6 bzw. 7 abtastbar, wobei die Abtastung in bekannter Weise nach optoelektronischen, magnetischen, induktiven, kapazitiven oder elektrostatischen Abtastprinzipien erfolgen kann und der Durchgang einer Marke 4 bzw. eines Einzelinkrementes der Meßteilung 5 in den zugeordneten Aufnehmern 6 bzw. 7 je ein elektrisches Signal erzeugt. Die Bezugsmarke 4 kann beispielsweise in der oberen Totpunktstellung eines Kolbens der Verbrennungskraftmaschine ein Durchgangssignal im Aufnehmer 6 erzeugen. Man kann entsprechende Marken für die Totpunktstellungen aller Kolben vorsehen.

Mit den Aufnehmern 6, 7 sind Auswertungsschaltungen 8, 9 verbunden, die die Abtastsignale, insbesondere wenn diese als Analogsignale erhalten werden, in eine in einem Rechner 10 bzw. Zähler 11 verarbeitbare digitale Form aufbereiten. Der Aufnehmer 6 ist über die Auswertungsschaltung 8 direkt mit einem Rechner 10 verbunden, dagegen steuert der Aufnehmer 7 über die Auswertungsschaltung 9 einen Digitalzähler 11, der seinerseits mit dem Rechner verbunden ist.

Weiterhin sind mit dem Rechner eine Zeitgebereinheit 12 und ein Lastfühler 13 verbunden, wobei dem Lastfühler 13 eine Auswertungsschaltung 14 und ein A/D-Wandler 15 zugeordnet sind. Der Lastfühler 13 kann z. B. die Stellung einer Drosselklappe des Motors oder den Luftdurchsatz im Ansaugrohr und damit die momentane Motorlast erfassen, wobei in der Auswertungsschaltung 14 eine Differenzierung der Meßsignale vom Lastfühler 13 vorgenommen werden kann, um den Rechner 10 über den A/D-Wandler 15 mit Signalen zu versorgen, die der Laständerung entsprechen. Der Zeitgeber 12 kann als freilaufender Zeitgeber ausgebildet sein, wobei Teilerstufen zur Vorgabe oder Vorwahl einer bestimmten Taktzeit zum Einsatz kommen können.

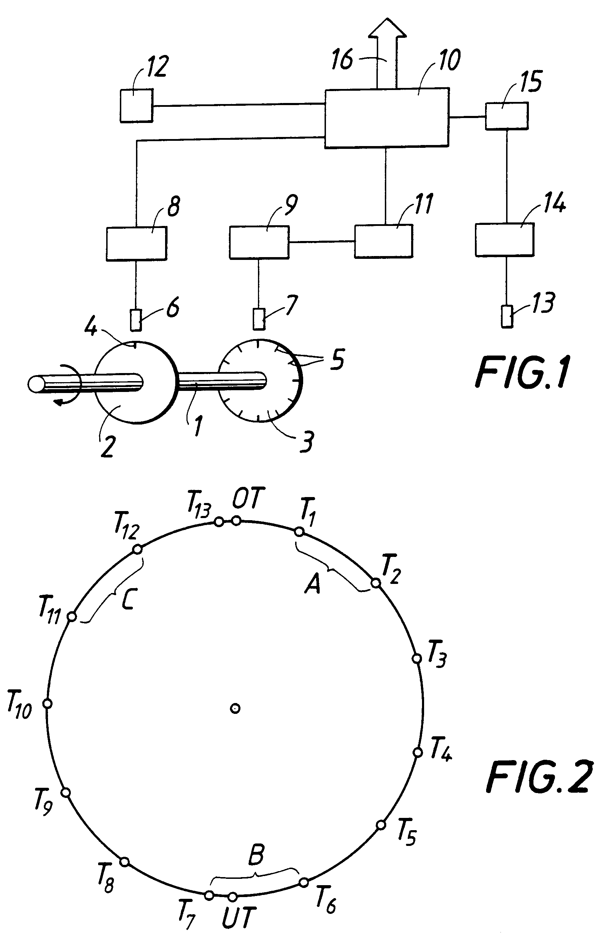

Im Zusammenhang mit Fig. 2 wird eine mögliche Art der Auswertung der erfaßten Signale beschrieben: Während einer Umdrehung der Kurbelwelle erhält der Rechner 10 vom Aufnehmer 6 beim Durchgang der Marke 4 ein Signal, das die Erreichung der oberen Totpunktlage OT bzw. den Zündzeitpunkt angibt. Beim Umlauf der Welle 1 werden ferner durch Abtastung der Meßteilung 5 mittels des Aufnehmers 7 fortlaufend Meßsignale erzeugt und in den Zähler 11 eingezählt. Über den Zeitgeber 12 wird der Rechner angesteuert und bestimmt aufgrund seines Steuerprogrammes Meßperioden A, B, C. Im Diagramm nach Fig. 2 sind der obere und untere Totpunkt OT, UT und die vom freilaufenden Zeitgeber 12 während einer Kurbelwellenumdrehung einlangenden Zeitsignale T₁, T₂......T₁₃ angegeben. Der Rechner 10 kann nun so programmiert sein, daß er nur am Anfang und Ende der Meßperioden den Stand des Zählers 11 abfrägt, also z. B. so programmiert ist, daß er bei dem ersten Zeitsignal T₁, das nach OT eintrifft, den Zählerstand erfaßt und speichert und am Ende der Meßperiode A zum Zeitpunkt T₂ neuerlich den Zählerstand erfaßt und den vorher gespeicherten Zählerstand von dem nun erfaßten Wert abzieht, sowie die gebildete Differenz, die der Umfangsgeschwindigkeit im Teilbereich A proportional ist, speichert. Weitere entsprechende Teilmessungen können in den Meßperioden B und C vorgenommen werden. Der Rechner 10 erhält sowohl die Zeitsignale aus 12 als auch die Stellungssignale über 4 und 6, so daß es möglich ist, auch bei Drehzahländerungen und damit Änderungen der Anzahl der Meßzeitpunkte T₁ usw. während einer Umdrehung die Geschwindigkeitsmessungen etwa in gleichen Drehwinkelbereichen der Kurbelwelle durchzuführen. Die Teilmeßwerte für die Perioden A, B und C werden im Rechner gespeichert und weiter verarbeitet, dabei ist eine Entscheidungslogik vorgesehen, die abhängig von der über 13 erfaßten Motorlast bzw. Motorlaständerungsgeschwindigkeit (über 14) und gegebenenfalls aufgrund weiterer Kriterien z. B. aufgrund der durch Zählung der Durchgänge von 4 (= OT) an 6 leicht ermittelbaren Grunddrehzahl oder auch aufgrund der gemessenen und errechneten Drehzahl festlegt, ob das vom Rechner über eine Ausgabe 16 an die Motorsteuerung und/oder Meß- und Anzeigegeräte abgegebene Signal aus den Meßwerten während einer Umdrehung oder als Durchschnittswert aus den Meßwerten mehrerer Umdrehungen ermittelt wird.

Im Rahmen der Erfindung sind verschiedene Varianten möglich. Nach einer dieser Möglichkeiten kann man über Teilerstufen des Zeitgebers 12 den vorgegebenen Zeittakt drehzahlabhängig ändern, wobei diese Taktänderung selbstverständlich bei der Berechnung berücksichtigt wird. Ferner kann man die Signale des Aufnehmers 6 nach entsprechender Umformung auch als Start- bzw. Rücksetzsignale für den Zähler 11 einsetzen und schließlich ist es ohne weiteres möglich, die Marken 4 und die Meßteilung 5 auf einem gemeinsamen Träger anzubringen, der von den Aufnehmern 6 und 7 in zwei Spuren abgestastet wird.

## Patentansprüche

1. Vorrichtung zur elektronischen Messung der Drehzahl von Verbrennungskraftmaschinen mit einem Rechner zur Berechnung der Drehzahl, der mit einem Empfänger zur Erfassung des Durchganges von Bezugs- bzw. Meßteilungsmarken an einem mit der Kurbelwelle umlaufenden Teil und mit einem Zeitgeber verbunden ist, wobei gesonderte Empfänger (6, 7) für die Erfassung des Durchganges von Bezugsmarken (4) und Meßteilungsmarken (5) vorgesehen sind, der Empfänger (7) für die Meßteilungsmarken (5) einen Zähler (11) steuert, dessen Stand über Zeitgeber (12) und Bezugsmarkenempfänger (6) gesteuert mehrmals während einer Umdrehung auf den Rechner (10) abfragbar ist, und daß der Rechner (10) aus den momentanen Zählerständen durch Differenzbildung die momentane Drehgeschwindigkeit berechnet, dadurch gekennzeichnet, daß ein Fühler (13) für die momentane Motorlast mit dem Rechner verbunden und für den Rechner (10) eine Entscheidungslogik mit vorgebbaren Schwellwerten vorgesehen ist, so daß der Rechner (10) bei über einer vorgebbaren Schwelle liegender Motorlast oder Motorlaständerung den Drehzahl- bzw. Drehgeschwindigkeitswert oder den Wert der Drehgeschwindigkeitsänderung in vorgegebenen Drehwinkelbereichen aus einer geringen Anzahl von Zählerständen, insbesondere aus während einer Umdrehung oder eines Teiles einer Umdrehung abgefragten Zählerständen und bei unter der vorgegebenen Schwelle liegender Motorlast die Drehzahl aus während mehrerer Umdrehungen abgefragten Zählerständen berechnet.

2. Verfahren zur Überwachung eines Motors mit einer Vorrichtung nach Anspruch 1, dadurch gekennzeichnet, daß pro Umdrehung mehrere Teilwerte der Drehgeschwindigkeit über vorgegebene Drehwinkel aus den Messungen berechnet und diese berechneten Werte abhängig von der Vorgabe durch die Entscheidungslogik zu einem Aussagewert über die Drehgeschwindigkeitsänderung innerhalb einer oder mehreren Umdrehungen verknüpft werden.

## Claims

1. A device for electronically measuring the speed of internal combustion engines, comprising a computer for calculating the speed and connected, via a receiver for detecting the passage of reference or graduation marks, to a timer and to a part rotating with the crankshaft, separate receivers (6, 7) being provided for detecting the passage of reference marks (4) and graduation marks (5), the receiver (7) for the graduation marks (5) actuating a counter (11), the level of which can be scanned on the computer (10) a number of times during each revolution, in controlled manner via the timer (12) and reference-mark receiver (6), and the computer (10) calculates the instantaneous speed from the instantaneous counter levels by subtraction,
characterised in that a sensor for the instantaneous engine load is connected to the computer and the computer (10) is provided with a decision logic having presettable threshold values, so that when the engine load or the change therein is above a presettable threshold the computer (10) calculates the speed or speed of rotation or the change therein over preset angular ranges from a small number of counter levels, more particularly from the counter levels scanned during a revolution or part of a revolution, whereas when the engine load is below the preset threshold the computer calculates the speed from counter levels scanned during a number of revolutions.

2. A method of monitoring an engine by using a device according to claim 1, characterised in that during each revolution, a number of partial values of the speed of rotation over preset angles are calculated from the measurements and the calculated values are linked, in dependence on the value set by the decision logic, to give information about the change in speed within one or more revolutions.

## Revendications

1. Dispositif de mesure électronique de la vitesse de rotation de moteurs à combustion interne, avec un ordinateur, pour effectuer le calcul de la vitesse de rotation et relié à un récepteur, en vue d'appréhender le passage de marques de référence et de graduations de mesure sur une partie en rotation avec le vilebrequin et relié à une horloge, des récepteurs (6, 7) séparés étant prévus pour appréhender le passage de marques de référence (4) et de marques de graduations de mesure (5), le récepteur (7) affecté aux marques de graduations de mesure (5) commandant un compteur (11), dont l'état peut être interrogé plusieurs fois pendant un tour, par l'intermédiaire d'un cadenceur (12) et de récepteurs (6) de marques de référence, l'état étant transmis à l'ordinateur (10), et en ce que l'ordinateur (10) calcule la vitesse de rotation instantanée, à partir des états de compteur instantanés, par formation de différences,
caractérisé en ce qu'une sonde (13) destinée à appréhender la charge moteur instantanée est reliée à l'ordinateur et une logique de décision à affectation de valeurs de seuil étant prévue pour l'ordinateur (10), de manière que l'ordinateur (10) calcule, en cas de charge moteur située au-dessus d'un seuil pouvant être prédéterminé, ou de fluctuations de la charge moteur, la valeur du nombre de tours, respectivement de la vitesse de rotation, ou la valeur de la fluctuation de la vitesse de rotation, dans des plages d'angles de rotation prédéterminées, à partir d'un fable nombre d'états de compteur, en particulier à partir d'états de compteur scrutés pendant un tour ou une partie d'un tour et, en cas de charge moteur située au-dessous du seuil prédéterminé, calcule la vitesse de rotation à partir d'états de compteur scrutés pendant plusieurs tours.

2. Procédé de surveillance d'un moteur équipé d'un dispositif selon la revendication 1,
caractérisé en ce que, par tour, plusieurs valeurs partielles de la vitesse de rotation sont calculées, par l'intermédiaire de l'angle de rotation prédéterminé, à partir des mesures, et que ces valeurs calculées sont combinées, en fonction de la consigne, au moyen de la logique de décision, pour donner une valeur estimative de la fluctuation de la vitesse de rotation dans les limites d'un ou plusieurs tours.
